(19) **Europäisches Patentamt / European Patent Office / Office européen des brevets**

(11) **EP 2 157 516 B1**

(12) # FASCICULE DE BREVET EUROPEEN

(45) Date de publication et mention de la délivrance du brevet:
**28.08.2013 Bulletin 2013/35**

(51) Int Cl.:
*G06F 13/40* *(2006.01)*    *G06F 13/28* *(2006.01)*

(21) Numéro de dépôt: **09007756.1**

(22) Date de dépôt: **12.06.2009**

(54) **Systéme de traitement de données disposant de moyens de traitement répartis pour exploiter des latences intrinsèques du système**

Datenverarbeitungssystem, das über verteilte Verarbeitungsmittel verfügt, um systeminterne Latenzzeiten auszunutzen

Data processing system with distributed processing means to use the intrinsic latencies of the system

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **14.08.2008 FR 0804593**

(43) Date de publication de la demande:
**24.02.2010 Bulletin 2010/08**

(73) Titulaire: **STMicroelectronics Rousset SAS 13790 Rousset (FR)**

(72) Inventeur: **Martinez, Albert 13320 Bouc Bel Air (FR)**

(74) Mandataire: **Marchand, André et al OMNIPAT 24 Place des Martyrs de la Résistance 13100 Aix-en-Provence (FR)**

(56) Documents cités:
**EP-A- 1 840 751    US-A- 5 737 638**

**Description**

La présente invention concerne les systèmes de traitement de données comprenant plusieurs éléments communiquant entre eux par l'intermédiaire d'un réseau d'interconnexion. La présente invention concerne en particulier les systèmes intégrés dans une microplaquette de semi-conducteur SoC (System-on-Chip).

La transmission de données dans un réseau reliant plusieurs éléments d'un système de traitement, subit des retards en raison de latences intrinsèques liées à l'architecture du réseau. Les sources de telles latences résident généralement dans les matrices de routage, les traitements éventuels de conversion de format appliqués aux données, et les temps de transit des données dans des mémoires tampon ou de stockage temporaire. Les données transmises peuvent également devoir subir des traitements spécifiques avant d'être reçues par un élément destinataire.

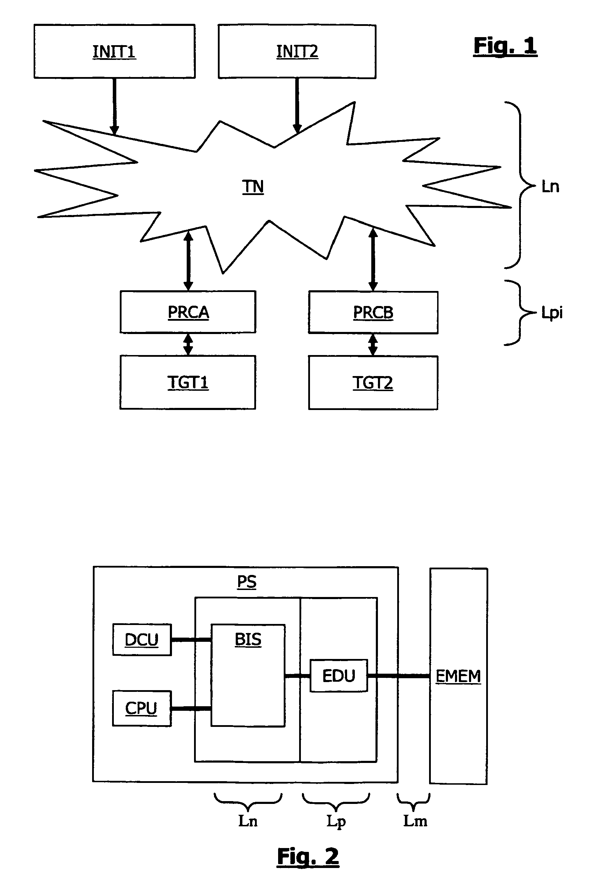

La figure 1 représente schématiquement un système de traitement comprenant un réseau de transmission TN, des éléments initiateurs INT1, INT2 susceptibles d'amorcer une communication dans le réseau, des éléments destinataires TGT1, TGT2 susceptibles de recevoir des messages provenant du réseau, et éventuellement des traitements spécifiques PRCA, PRCB susceptibles d'être appliqués aux messages avant qu'ils ne soient transmis aux éléments destinataires. La latence globale de transmission d'un message est égale à la latence du réseau Ln augmentée de la latence Lp introduite par le traitement PRCA, PRCB appliqué au message.

Dans un système sur puce (SoC), le réseau d'interconnexion TN est généralement un bus, par exemple de type STBus, AMBA, etc. Les éléments initiateurs INT1, INT2 sont des éléments pouvant être maître sur le bus et initier des transactions vers les récepteurs. Les éléments initiateurs sont par exemple des unités de traitement (CPU), et des unités de contrôle de DMA (Direct Memory Access). Les éléments récepteurs TGT1, TGT2 sont des éléments esclaves ne pouvant répondre qu'à des requêtes émises par les éléments initiateurs. Les éléments récepteurs sont par exemple une mémoire externe du système et une unité d'accélération.

Par ailleurs, il est souvent nécessaire de protéger la mémoire externe d'un système contre des attaques visant à lire ou modifier son contenu. Pour contrer ce type d'attaque, il est connu d'appliquer une fonction de chiffrement aux données avant de les écrire dans la mémoire externe, et une fonction inverse aux données lues dans la mémoire.

Ainsi, la figure 2 représente schématiquement un système sur puce PS1 connecté à une mémoire externe EMEM. Le système PS comprend des unités initiatrices telles qu'une unité de traitement CPU et une unité de contrôle de DMA DCU, une infrastructure de bus BIS, et une unité d'interface de chiffrement/déchiffrement EDU permettant de sécuriser les données stockées dans la mémoire externe EMEM. L'infrastructure de bus BIS introduit une latence Ln dans la transmission des requêtes d'accès à la mémoire EMEM émises par les unités initiatrices CPU. L'unité EDU introduit une latence supplémentaire Lp dans le traitement de ces requêtes. A noter que les unités initiatrices peuvent également introduire des latences correspondant par exemple à des temps de transit dans une mémoire cache ou une mémoire tampon. Le temps d'accès à la mémoire externe qui peut être assez long constitue également une latence Lm qui s'ajoute à la durée du traitement de chiffrement ou de déchiffrement des données inscrites ou lues dans la mémoire EMEM.

Il est souhaitable de réduire la latence globale dans un système de traitement de données comprenant plusieurs unités interconnectées par un réseau de transmission de données. A cet effet, une idée de l'invention est de mettre à profit les différentes latences pour réaliser des traitements répétitifs et systématiques sur les données transmises.

Cet objectif est atteint par la prévision d'un procédé d'acheminement de données entre une unité émettrice et une unité destinataire reliées par un réseau dans un système de traitement comportant plusieurs unités, le procédé comprenant des étapes d'acheminement des données dans le réseau entre l'unité émettrice et l'unité destination, et d'application d'un traitement aux données acheminées. Selon un mode de réalisation, le traitement comprend plusieurs étapes séquentielles qui sont appliquées aux données par différentes unités du réseau recevant les données, pour exploiter des temps de latence d'acheminement des données.

Selon un mode de réalisation, une information permettant de déterminer l'avancement du traitement est transmise en association avec les données transmises dans le réseau.

Selon un mode de réalisation, le traitement appliqué aux données transmises est un traitement de chiffrement ou de déchiffrement selon l'identité de l'unité émettrice ou destinataire des données transmises, ou bien un traitement de formatage des données.

Selon un mode de réalisation, le traitement appliqué aux données comprend plusieurs itérations.

Selon un mode de réalisation, les données sont transmises dans le réseau en association avec une information permettant de déterminer le nombre d'itérations exécutées ou restant à exécuter sur les données transmises.

Selon un mode de réalisation, les données sont transmises dans le réseau dans des trames contenant l'information permettant de déterminer le nombre d'itérations restant à exécuter sur les données transmises.

Selon un mode de réalisation, le nombre d'itérations exécutées par chaque unité du système est fixe.

Selon un mode de réalisation, le nombre d'itérations exécutées par une unité du système est adapté à une durée de transit des données dans l'unité.

Dans un mode de réalisation, il est également prévu un système comprenant plusieurs unités connectées en réseau, le système étant configuré pour acheminer des données entre une unité émettrice et une unité destinatrice et pour appliquer un traitement aux données. Selon un mode de réalisation, le traitement comprend plusieurs étapes séquentielles, au moins certaines des unités du réseau étant configurées pour appliquer aux données qu'elles reçoivent certaines des étapes séquentielles du traitement, pour exploiter des temps de latence d'acheminement des données.

Selon un mode de réalisation, le système est configuré pour transmettre en association avec les données transmises dans le réseau, une information permettant de déterminer l'avancement du traitement.

Selon un mode de réalisation, le traitement appliqué aux données transmises est un traitement de chiffrement ou de déchiffrement selon l'identité de l'unité émettrice ou destinataire des données transmises, ou bien un traitement de formatage des données.

Selon un mode de réalisation, le traitement appliqué aux données comprend plusieurs itérations.

Selon un mode de réalisation, les données sont transmises dans le réseau en association avec une information permettant de déterminer le nombre d'itérations exécutées ou restant à exécuter sur les données transmises.

Selon un mode de réalisation, les données sont transmises dans le réseau dans des trames contenant l'information permettant de déterminer le nombre d'itérations restant à exécuter sur les données transmises.

Selon un mode de réalisation, le nombre d'itérations exécuté par chaque unité du système est fixe.

Selon un mode de réalisation, le nombre d'itérations exécutées par une unité du système est adapté à une durée de transit des données dans l'unité.

Selon un mode de réalisation, le réseau est un bus local interconnectant les unités du système.

Selon un mode de réalisation, le système comprend plusieurs sous-systèmes connectés en réseau par l'intermédiaire de routeurs formant des noeuds d'un réseau, chaque sous-système comprenant une unité d'interface réseau connectée à l'un des routeurs, les unités d'interface et les routeurs comprenant chacun une unité de traitement partagé pour exécuter une ou plusieurs itérations d'un traitement à appliquer aux données transmises par le réseau.

Selon un mode de réalisation, le système est réalisé sur une microplaquette de semi-conducteur.

Des exemples de réalisation de l'invention seront décrits dans ce qui suit, à titre non limitatif en relation avec les figures jointes parmi lesquelles :

- la figure 1 décrite précédemment représente schématiquement un système de traitement,
- la figure 2 décrite précédemment représente schématiquement un système sur puce,
- la figure 3 représente schématiquement un système de traitement selon un mode de réalisation,
- la figure 4 représente schématiquement un système de traitement selon un autre mode de réalisation,
- la figure 5 représente schématiquement un système de traitement selon un autre mode de réalisation.

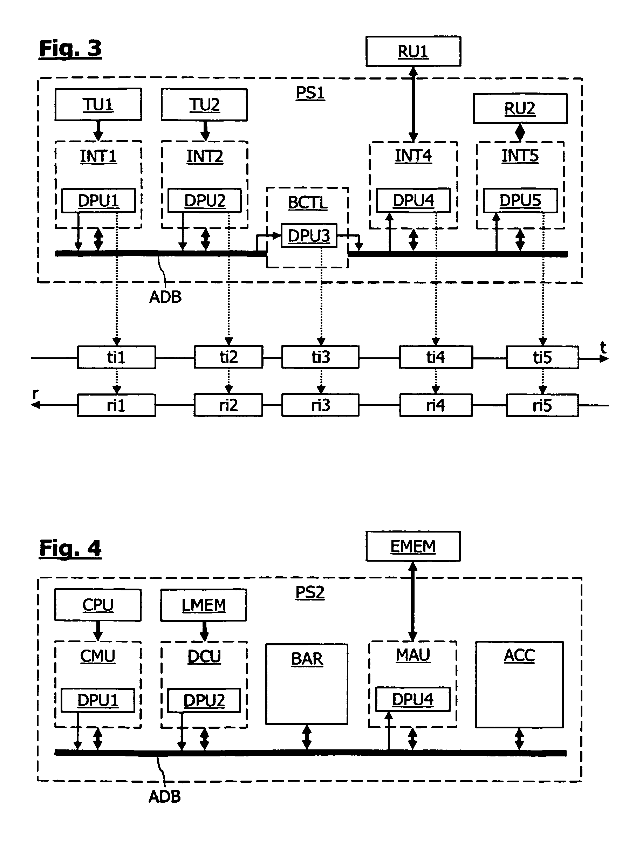

La figure 3 représente un système de traitement PS1 comprenant des unités initiatrices TU1, TU2 susceptibles d'émettre des requêtes d'accès à des données et des unités réceptrices RU1, RU2 destinatrices de requêtes d'accès à des données. Les unités TU1, TU2, RU1 et RU2 sont reliées par l'intermédiaire d'unités d'interface INT1, INT2, INT4, INT5 à un bus ADB contrôlé par une unité de contrôle de bus BCTL. Les unités réceptrices RU1, RU2 peuvent être externes ou internes au système PS1. Le bus ADB transmet des données entre les unités initiatrices TU1, TU2 et les unités réceptrices RU1, RU2. Avant d'atteindre les unités RU1, RU2, les données subissent un traitement, tel qu'un traitement de conversion ou de chiffrement, par exemple pour être protégées si elles sont émises à l'extérieur du système de traitement PS1. Inversement, avant d'atteindre les unités initiatrices TU1, TU2, les données provenant des unités RU1, RU2 subissent un traitement permettant de les rendre exploitables par les unités TU1, TU2. Ainsi, si les données provenant des unités RU1, RU2 ont préalablement subi un traitement de conversion ou de chiffrement, elles subissent un traitement de conversion inverse ou de déchiffrement pour être exploitables par les unités TU1, TU2. Il est à noter que les unités d'interface INT1, INT2, INT4, INT5 peuvent indifféremment faire partie ou être à l'extérieur des unités TU1, TU2, RU1 et RU2 comme représenté sur la figure 3.

Les unités initiatrices TU1, TU2 peuvent être des unités de traitement, ou des unités de contrôle de DMA. Les unités réceptrices RU1, RU2 peuvent être des unités d'interface avec des mémoires externes, des ports d'entrée/sortie du système ou des unités d'accélération. L'unité d'interface INT1, INT2 d'une unité de traitement TU1, TU2 peut être une unité de contrôle de mémoire cache.

Les transferts de données entre les unités initiatrices et les unités destinatrices introduisent des latences, notamment en raison d'opérations exécutées par les unités d'interface INT1, INT2, INT4, INT5 et par l'unité BCTL pour acheminer les données.

Selon un mode de réalisation, le traitement à appliquer aux données transmises par le bus ADB comprend plusieurs étapes séquentielles qui sont réparties dans des unités de traitement réparti DPU1-DPU5 prévues dans les unités d'interface INT1, INT2, INT4, INT5, et éventuellement dans l'unité de contrôle de bus BCTL. La durée d'exécution des étapes de traitement réalisées par chacune des unités DPU1-DPU5 peut être inférieure ou égale au temps de latence dû aux opérations de transfert, qui apparaît dans l'unité d'interface ou l'unité de contrôle BCTL, où se trouve l'unité de traitement réparti.

Si l'on considère les chemins de transfert de donnée dans le système PS1, les données sont transférées dans le système d'une unité initiatrice TU1, TU2 à une unité réceptrice RU1, RU2, ou inversement, en passant par l'unité de contrôle de bus BCTL. Il en résulte que le traitement à appliquer aux données peut être partagé entre les unités DPU1 ou DPU2, DPU3 et DPU4 ou DPU5. Ainsi, lors d'un transfert de donnée d'une unité initiatrice TU1, TU2 vers une unité réceptrice RU1, RU2, l'unité DPU1 ou DPU2 réalise une ou plusieurs des premières étapes du traitement à appliquer aux données, l'unité DPU3 réalise une ou plusieurs étapes intermédiaires, et l'unité DPU4 ou DPU5 réalise une ou plusieurs des dernières étapes du traitement. Inversement, lors d'un transfert de donnée d'une unité réceptrice RU1, RU2 vers une unité initiatrice TU1, TU2, l'unité DPU4 ou DPU5 réalise une ou plusieurs des premières étapes du traitement à appliquer aux données, l'unité DPU3 réalise une ou plusieurs étapes intermédiaires, et l'unité DPU1 ou DPU2 réalise une ou plusieurs des dernières étapes du traitement.

Dans un mode de réalisation, le traitement à appliquer aux données est un traitement itératif, c'est-à-dire comprenant l'exécution un certain nombre de fois, d'une même étape de traitement appelée "itération" appliquée aux données issues d'une itération précédente. La figure 3 représente sur des axes orientés t et r symbolisant les sens de transfert des données, en émission (des unités initiatrices vers les unités réceptrices), et en réception (des unités réceptrices vers les unités initiatrices), le nombre d'itérations ti1-ti5 et ri1-ri5 exécutées respectivement par chacune des unités DPU1-DPU5 en émission et en réception. Les nombres d'itération satisfont aux relations suivantes :

$$(ti1 \ ou \ ti2) + ti3 + (ti4 \ ou \ ti5) = nti \quad (1)$$

$$(ri1 \ ou \ ri2) + ri3 + (ri4 \ ou \ ri5) = nri \quad (2)$$

nti et nri étant le nombre total d'itération du traitement à appliquer aux données, respectivement en émission et en réception.

Dans un mode de réalisation, ti1 est égal à ti2, ti4 est égal à ti5, ri1 est égal à ri2 et ri4 est égal à ri5.

Alternativement, les nombres d'itération ti1 et ti2 sont différents par exemple pour être adaptés à la durée des traitements effectués par les unités d'interface INT1 et INT2. Les nombres d'itération ti4 et ti5 sont alors adaptés au nombre d'itération restant à effectuer pour terminer le traitement à appliquer aux données transférées vers l'une ou l'autre des unités réceptrices RU1, RU2. A cet effet, chaque unité DPU1-DPU3 met à jour et transmet avec les données traitées le nombre d'itérations déjà effectuées ou restant à effectuer. Alternativement, un identifiant de l'unité émettrice est transmis en association avec les données traitées, de sorte que l'unité DPU4 ou DPU5 devant terminer le traitement peut déterminer le nombre d'itération restant à effectuer.

Les nombres d'itérations ri4 et ri5 peuvent également être différents par exemple pour être adaptés à la durée des traitements effectués par les unités d'interface INT4 et INT5. Les nombres d'itération ri1 et ri2 sont alors adaptés au nombre d'itération restant à effectuer pour terminer le traitement à appliquer aux données transférées vers l'une ou l'autre des unités initiatrices TU1, TU2. A cet effet, chaque unité DPU3-DPU5 met à jour et transmet avec les données traitées le nombre d'itérations déjà effectuées ou restant à effectuer. Alternativement, chaque unité DPU3-DPU5 transmet avec les données traitées un identifiant de l'unité émettrice INT4 ou INT5, de sorte que l'unité DPU1 ou DPU2 devant terminer le traitement peut déterminer le nombre d'itération restant à effectuer.

Dans un mode de réalisation, l'unité initiatrice TU1, TU2 ou l'unité d'interface INT1, INT2 correspondante indique à l'unité DPU4, DPU5 de l'unité réceptrice RU1, RU2 le nombre d'itération ri4, ri5 à effectuer ou son identifiant de sorte que l'unité DPU4, DPU5 ou l'unité INT4, INT5 peut déterminer le nombre d'itération ri4, ri5 à effectuer.

La figure 4 représente un exemple de système de traitement PS2 comprenant une unité de traitement CPU, une unité de contrôle de DMA DCU, une unité d'interface de mémoire externe MAU, une unité d'accélération ACC et une unité d'arbitrage de bus BAR contrôlant les accès à un bus ADB interconnectant les unités CPU, DCU, ACC et MAU. L'unité CPU est reliée au bus ADB par l'intermédiaire d'une unité de cache mémoire CMU. L'unité MAU a pour fonction de donner au système un accès à une mémoire externe EMEM, le contenu de la mémoire étant protégé par chiffrement. L'unité DCU a pour fonction d'assurer des transferts DMA entre une unité interne et la mémoire externe EMEM. Les unités susceptibles de commander une écriture ou une lecture de données dans la mémoire EMEM sont les unités de traitement CPU ou l'unité de cache mémoire CMU et l'unité de contrôle DCU. Les fonctions chiffrement/déchiffrement appliquées aux données mémorisées dans la mémoire EMEM sont par exemple basées sur un algorithme de type AES (Advanced Encryption System). Cet algorithme comporte classiquement 10 itérations pour chiffrer et déchiffrer 128 bits de données, la première itération pouvant être légèrement différente des autres.

Pour exploiter les temps de latence qui apparaissent dans le système, les itérations des fonctions chiffrement/déchiffrement sont réparties dans le système. Ainsi, les unités CMU, DCU, et MAU comprennent chacun une unité de chiffrement et de déchiffrement DPU1, DPU2 et DPU4. Le nombre d'itérations effectuées par chacune des unités DPU1, DPU2, DPU4 est adapté au temps de latence introduit par l'unité dont elle fait partie, en respectant la contrainte que le nombre total d'itérations effectuées durant un transfert de donnée correspond au nombre d'itérations devant être effectuées. Le nombre d'itérations effectuées par l'unité DPU4 dans l'unité d'accès à la mémoire MAU correspond donc au nombre d'itérations restant à effectuer lors d'une écriture de données dans la mémoire EMEM, compte tenu du nombre d'itérations prises en charge par l'une ou l'autre des unités DPU1, DPU2. De même, lors d'une lecture de données dans la mémoire EMEM, le nombre d'itérations effectuées par l'unité DPU1 dans l'unité CMU ou DPU2 dans l'unité DCU correspond au nombre d'itérations restant à effectuer.

Par exemple, pour effectuer un transfert DMA de la mémoire externe EMEM vers l'unité d'accélération ACC, l'unité CPU programme l'unité DCU pour lire un ensemble de, par exemple, 1024 mots de 32 bits dans la mémoire EMEM et transférer cet ensemble vers l'unité ACC. L'unité DCU réalise le transfert de cet ensemble par bloc de 8 mots, chaque bloc étant transféré temporairement dans une mémoire locale LMEM connectée à l'unité DCU, avant d'être transféré vers l'unité ACC. Le temps d'accès à la mémoire EMEM est de L1 cycles d'horloge pour le premier mot dans la mémoire, puis 1 cycle pour chacun des sept mots suivants. Le déchiffrement des données lues en mémoire nécessite 10 itérations de 1 cycle d'horloge pour 128 bits, soit 2 x 10 cycles pour 256 bits. Chaque bloc de 8 mots transite pendant 9 cycles d'horloge dans la mémoire locale LMEM. Si tout le traitement de déchiffrement est effectué par l'unité DPU4, le temps nécessaire L pour transférer un bloc de 8 mots de 32 bits (256 bits) de la mémoire EMEM vers l'unité ACC est le suivant :

$$L = L1 + 7 + 10 + 10 + 9$$

Si une partie de chaque traitement de déchiffrement, par exemple 4 itérations, est effectuée par l'unité DPU2, de manière à exploiter une partie du temps de transit de 9 cycles dans la mémoire LMEM, le temps de transfert L se trouve réduit à :

$$L = L1 + 7 + 6 + 6 + 9,$$

soit une réduction de 8 cycles.

Pour effectuer un transfert DMA de l'unité d'accélération ACC vers la mémoire externe EMEM, l'unité CPU programme l'unité DCU pour lire un ensemble de, par exemple, 1024 mots de 32 bits dans l'unité ACC, et le transférer dans la mémoire EMEM. L'unité DCU réalise le transfert de l'ensemble par bloc de 8 mots, chaque bloc étant transféré temporairement dans la mémoire locale LMEM avant d'être transféré vers l'unité MAU. Le temps d'accès en écriture à la mémoire EMEM est de L2 cycles d'horloge pour le premier mot dans la mémoire, puis 1 cycle pour chacun des sept mots suivants. Le chiffrement des données lues en mémoire nécessite 10 itérations de 1 cycle d'horloge pour 128 bits, soit 2 x 10 cycles pour 256 bits, et chaque bloc de 8 mots transite pendant 9 cycles d'horloge dans la mémoire locale LMEM. Si tout le traitement de chiffrement est effectué par l'unité DPU4, le temps de transfert L d'un bloc de 8 mots de 32 bits de l'unité ACC vers la mémoire EMEM est le suivant :

$$L = 9 + 10 + 10 + L2 + 7$$

Si une partie de chaque traitement de chiffrement, par exemple 4 itérations, est effectué par l'unité DPU2, de manière à exploiter le temps de transit de 9 cycles dans la mémoire LMEM, le temps de transfert L se trouve réduit à :

$$L = 9 + 6 + 6 + L2 + 7,$$

soit une réduction de 8 cycles.

Si la taille des blocs transférés est variable, le nombre d'itérations exécutées par l'unité DPU2 en lecture ou écriture de la mémoire EMEM peut être adapté au temps de latence de l'unité DCU. Ainsi, si la taille des blocs transférés est de 4 mots de 32 bits, le temps de latence de l'unité DCU passe à 5 cycles. L'unité DPU2 ne peut alors exécuter qu'une seule itération du traitement de chiffrement ou de déchiffrement, les neuf autres itérations étant alors effectuées par l'unité DPU4. Si la taille des blocs transférés est de 16 mots de 32 bits, le temps de latence de l'unité DCU passe à 17 cycles. La totalité des traitements de chiffrement et de déchiffrement peut alors être effectuée par l'unité DPU2.

Les unités initiatrices CPU (ou CMU) et DCU sont configurées pour adapter le nombre d'itérations exécutées par leur unité de traitement réparti DPU1, DPU2 en fonction de la latence du traitement qu'elles activent. Les requêtes à la mémoire externe EMEM adressées à l'unité MAU indiquent le nombre d'itérations à effectuer par l'unité DPU4. Ainsi, en écriture dans la mémoire EMEM, les données à écrire sont transmises par le bus ADB en association avec le nombre d'itérations de chiffrement restant à effectuer par l'unité DPU4. En lecture de la mémoire EMEM, la requête de lecture peut être associée au nombre d'itérations du traitement de déchiffrement, à effectuer par l'unité DPU4. L'unité DPU4 peut également être configurée pour pouvoir observer les requêtes d'accès à la mémoire, contenant l'émetteur de la requête et un type de requête, et pour déterminer le nombre d'itérations à exécuter en fonction de ces informations.

Dans une variante simplifiée, le nombre d'itérations exécutées par chaque unité DPU1, DPU2, DPU4 est fixe, quels que soient la requête et le sens de transfert des données entre la mémoire EMEM et le système PS2. Dans ce cas, il n'est pas nécessaire de transmettre avec les données une information permettant de déterminer l'avancement du traitement ou le nombre d'itérations devant être exécutées par l'unité de traitement DPU1, DPU2, DPU4 qui reçoit les données.

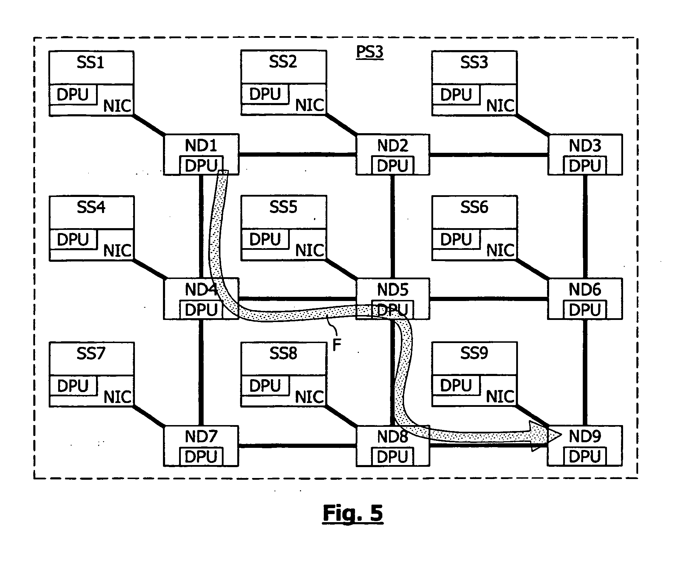

La figure 5 représente un système PS3 ayant une architecture de réseau intégré NoC (Network on Chip). Le système PS3 comprend plusieurs sous systèmes SS1-SS9 connectés en réseau par l'intermédiaire de routeurs ND1-ND9 formant des noeuds du réseau. Chaque sous-système SS1-SS9 comprend une unité d'interface réseau NIC connectée à l'un des routeurs ND1-ND9.

Pour exploiter les temps de latence intrinsèques au réseau, les unités d'interface NIC et les routeurs ND1-ND9 comprennent chacun une unité de traitement partagé DPU. Chaque routeur ND1-ND9 peut comprendre un ou plusieurs ports d'entrée et de sortie pour se connecter à un ou plusieurs autres routeurs. Chaque sous-système SS1-SS9 peut comprendre un ou plusieurs processeurs, une ou plusieurs mémoires internes, des contrôleurs d'entrée/sortie et un bus local interconnectant les différents composants du sous-système. Chaque sous-système SS1-SS9 peut disposer en outre d'une horloge propre qui peut être complètement asynchrone des horloges des autres sous-systèmes. Ainsi, chaque sous-système SS1-SS9 peut présenter l'architecture représentée sur la figure 3 ou 4, avec l'unité d'interface réseau NIC connectée au bus local ADB.

Pour gérer l'asynchronisme des sous-systèmes SS1-SS9, les routeurs ND1-ND9 et les unités d'interface réseau NIC des sous-systèmes comprennent des mémoires tampons par exemple de type FIFO (First-In First-Out) mémorisant temporairement des données à transmettre par le réseau. Il en résulte des temps de latence qui peuvent être exploités par les unités DPU pour réaliser des étapes d'un traitement à appliquer aux données à transmettre. Les données sont alors transmises en association avec une information permettant de déterminer l'avancement du traitement. Ainsi, si les données sont transmises entre les noeuds du réseau dans des trames, un champ de chaque trame peut spécifier un état d'avancement du traitement, tel qu'un nombre d'itération.

La figure 5 représente par une flèche un chemin de transmission de données dans le système PS3, du sous-système SS1 au sous-système SS9, et passant par les routeurs ND1, ND4, ND5, ND8 et ND9. Le traitement à appliquer aux données peut donc être réalisé successivement par les unités de traitement DPU du sous-système SS1, puis des routeurs ND1, ND4, ND5, ND8 et ND9, et enfin du sous-système SS9.

**Revendications**

1. Procédé d'acheminement de données entre une unité émettrice (TU1, TU2) et une unité destinataire (RU1, RU2) reliées par un réseau (ADB) dans un système de traitement (PS1) comportant plusieurs unités, le procédé comprenant des étapes de :

   acheminement des données dans le réseau entre l'unité émettrice et l'unité destination, et
   application d'un traitement aux données acheminées,
   **caractérisé en ce que** le traitement comprend plusieurs étapes séquentielles qui sont appliquées aux données par différentes unités (DPU1-DPU5) du réseau recevant les données, pour exploiter des temps de latence d'acheminement des données.

2. Procédé selon la revendication 1, dans lequel une information permettant de déterminer l'avancement du traitement est transmise en association avec les données transmises dans le réseau (ADB).

3. Procédé selon l'une des revendications 1 à 2, dans lequel le traitement appliqué aux données transmises est un traitement de chiffrement ou de déchiffrement selon l'identité de l'unité émettrice ou destinataire des données transmises, ou bien un traitement de formatage des données.

**4.** Procédé selon l'une des revendications 1 à 3, dans lequel le traitement appliqué aux données comprend plusieurs itérations.

**5.** Procédé selon la revendication 4, dans lequel les données sont transmises dans le réseau en association avec une information permettant de déterminer le nombre d'itérations exécutées ou restant à exécuter sur les données transmises.

**6.** Procédé selon la revendication 5, dans lequel les données sont transmises dans le réseau dans des trames contenant l'information permettant de déterminer le nombre d'itérations restant à exécuter sur les données transmises.

**7.** Procédé selon la revendication 4, dans lequel le nombre d'itérations exécutées par chaque unité du système est fixe.

**8.** Procédé selon l'une des revendications 4 à 7, dans lequel le nombre d'itérations exécutées par une unité du système est adapté à une durée de transit des données dans l'unité.

**9.** Système comprenant plusieurs unités connectées en réseau, le système étant configuré pour acheminer des données entre une unité émettrice et une unité destinatrice et pour appliquer un traitement aux données, **caractérisé en ce que** le traitement comprend plusieurs étapes séquentielles, au moins certaines des unités du réseau étant configurées pour appliquer aux données qu'elles reçoivent certaines des étapes séquentielles du traitement, pour exploiter des temps de latence d'acheminement des données.

**10.** Système selon la revendication 9, configuré pour transmettre en association avec les données transmises dans le réseau, une information permettant de déterminer l'avancement du traitement.

**11.** Système selon l'une des revendications 9 à 10, dans lequel le traitement appliqué aux données transmises est un traitement de chiffrement ou de déchiffrement selon l'identité de l'unité émettrice ou destinataire des données transmises, ou bien un traitement de formatage des données.

**12.** Système selon l'une des revendications 9 à 11, dans lequel le traitement appliqué aux données comprend plusieurs itérations.

**13.** Système selon la revendication 12, dans lequel les données sont transmises dans le réseau en association avec une information permettant de déterminer le nombre d'itérations exécutées ou restant à exécuter sur les données transmises.

**14.** Système selon la revendication 13, dans lequel les données sont transmises dans le réseau dans des trames contenant l'information permettant de déterminer le nombre d'itérations restant à exécuter sur les données transmises.

**15.** Système selon la revendication 12, dans lequel le nombre d'itérations exécuté par chaque unité du système est fixe.

**16.** Système selon l'une des revendications 12 à 15, dans lequel le nombre d'itérations exécutées par une unité du système est adapté à une durée de transit des données dans l'unité.

**17.** Système selon l'une des revendications 9 à 16, dans lequel le réseau est un bus local (ADB) interconnectant les unités du système.

**18.** Système selon l'une des revendications 9 à 16, dans lequel le système (PS3) comprend plusieurs sous-systèmes (SS1-SS9) connectés en réseau par l'intermédiaire de routeurs (ND1-ND9) formant des noeuds d'un réseau, chaque sous-système comprenant une unité d'interface réseau (NIC) connectée à l'un des routeurs, les unités d'interface et les routeurs comprenant chacun une unité de traitement partagé (DPU) pour exécuter une ou plusieurs itérations d'un traitement à appliquer aux données transmises par le réseau.

**19.** Système selon l'une des revendications 9 à 18, réalisé sur une microplaquette de semi-conducteur.

**Patentansprüche**

1. Verfahren zum Routing von Daten in einem mehrere Einheiten umfassenden Verarbeitungssystem (PS1) zwischen einer Sendeeinheit (TU1, TU2) und einer Empfangseinheit (RU1, RU2), die über ein Netzwerk (ADB) verbunden sind, wobei das Verfahren folgende Schritte umfasst:

   Routing der Daten im Netzwerk zwischen der Sendeeinheit und der Empfangseinheit, und
   Anwendung einer Verarbeitung auf die gerouteten Daten,
   **dadurch gekennzeichnet, dass** die Verarbeitung mehrere sequentielle Schritte umfasst, die von verschiedenen Einheiten (DPU1-DPU5) des Netzwerks, welche die Daten empfangen, auf die Daten angewandt werden, um Latenzzeiten bei dem Routing der Daten zu nutzen.

2. Verfahren nach Anspruch 1, bei dem eine Information mittels welcher der Fortschritt der Verarbeitung bestimmt werden kann, zusammen mit den im Netzwerk (ADB) übertragenen Daten übertragen wird.

3. Verfahren nach einem der Ansprüche 1 bis 2, wobei es sich bei der auf die übertragenen Daten angewandten Verarbeitung um eine Verschlüsselung bzw. um eine Entschlüsselung je nach der Identität der Sendeeinheit bzw. der Empfangseinheit der übertragenen Daten, oder um eine Formatierung der Daten handelt.

4. Verfahren nach einem der Ansprüche 1 bis 3, bei dem die auf die Daten angewandte Verarbeitung mehrere Iterationen umfasst.

5. Verfahren nach Anspruch 4, bei dem die Daten im Netzwerk zusammen mit einer Information übertragen werden, mit der die Anzahl der mit den übertragenen Daten durchgeführten oder noch durchzuführenden Iterationen bestimmt werden kann.

6. Verfahren nach Anspruch 5, bei dem die Daten im Netzwerk in Rastern übertragen werden, welche die Information enthalten, mit der die Anzahl der mit den übertragenen Daten noch durchzuführenden Iterationen bestimmt werden kann.

7. Verfahren nach Anspruch 4, bei dem die Anzahl der von jeder Einheit des Systems durchgeführten Iterationen fest ist.

8. Verfahren nach einem der Ansprüche 4 bis 7, bei dem die Anzahl der von einer Einheit des Systems durchgeführten Iterationen an eine Durchgangszeit der Daten in der Einheit angepasst ist.

9. System umfassend mehrere in einem Netzwerk verbundene Einheiten, wobei das System konfiguriert ist, um Daten zwischen einer Sendeeinheit und einer Empfangseinheit zu routen, und eine Verarbeitung auf die Daten anzuwenden,
   **dadurch gekennzeichnet, dass** die Verarbeitung mehrere sequentielle Schritte umfasst, wobei wenigstens einige der Einheiten des Netzwerks konfiguriert sind, um auf die von ihnen empfangenen Daten einige der sequentiellen Verarbeitungsschritte anzuwenden, um Latenzzeiten bei dem Routing der Daten zu nutzen.

10. System nach Anspruch 9, das konfiguriert ist, um eine Information mittels welcher der Fortschritt der Verarbeitung bestimmt werden kann, zusammen mit den im Netzwerk übertragenen Daten zu übertragen.

11. System nach einem der Ansprüche 9 bis 10, bei dem es sich bei der auf die übertragenen Daten angewandten Verarbeitung um eine Verschlüsselung bzw. um eine Entschlüsselung je nach der Identität der Sendeeinheit bzw. der Empfangseinheit der übertragenen Daten, oder um eine Formatierung der Daten handelt.

12. System nach einem der Ansprüche 9 bis 11, bei dem die auf die Daten angewandte Verarbeitung mehrere Iterationen umfasst.

13. System nach Anspruch 12, bei dem die Daten im Netzwerk zusammen mit einer Information übertragen werden, mit der die Anzahl der mit den übertragenen Daten durchgeführten oder noch durchzuführenden Iterationen bestimmt werden kann.

14. System nach Anspruch 13, bei dem die Daten im Netzwerk in Rastern übertragen werden, welche die Information enthalten, mit der die Anzahl der mit den übertragenen Daten noch durchzuführenden Iterationen bestimmt werden kann.

**15.** System nach Anspruch 12, bei dem die Anzahl der von jeder Einheit des Systems durchgeführten Iterationen fest ist.

**16.** System nach einem der Ansprüche 12 bis 15, bei dem die Anzahl der von einer Einheit des Systems durchgeführten Iterationen an eine Durchgangzeit der Daten in der Einheit angepasst ist.

**17.** System nach einem der Ansprüche 9 bis 16, bei dem das Netzwerk ein örtlicher Bus (ADB) ist, der die Einheiten des Systems miteinander verbindet.

**18.** System nach einem der Ansprüche 9 bis 16, bei dem das System (PS3) mehrere Untersysteme (SS1-SS9) umfasst, die mittels Router (ND1-ND9) in einem Netzwerk verbunden sind, welche Knoten eines Netzwerks bilden, wobei jedes Untersystem eine an einen der Router angeschlossene Netzwerk-Schnittstellen-Einheit (NIC) umfasst, wobei die Schnittstellen-Einheiten und die Router jeweils eine gemeinsame Verarbeitungseinheit (DPU) zum Ausführen einer oder mehrerer Iterationen einer auf die durch das Netzwerk übertragenen Daten anzuwendenden Verarbeitung umfassen.

**19.** System nach einem der Ansprüche 9 bis 18, das auf einem Halbleiterchip durchgeführt wird.

**Claims**

**1.** A method for routing data between a sending unit (TU1, TU2) and a receiving unit (RU1, RU2) linked by a network (ADB) in a processing system (PS1) comprising several units, the method comprising steps of:

routing data in the network between the sending unit and the receiving unit, and
applying a process to the routed data,
**characterized in that** the process comprises several sequential steps which are applied to the data by different units (DPU1-DPU5) of the network receiving the data, to use latency times in data routing.

**2.** Method according to claim 1, wherein a piece of information which can be used to determine the progress of the process is sent in association with the data sent in the network (ADB).

**3.** Method according to one of claims 1 to 2, wherein the process applied to the data sent is a ciphering or deciphering process depending on the identity of the unit sending or receiving the data sent, or a data formatting process.

**4.** Method according to one of claims 1 to 3, wherein the process applied to the data comprises several iterations.

**5.** Method according to claim 4, wherein the data is sent in the network in association with a piece of information which can be used to determine the number of iterations executed or still to be executed on the data sent.

**6.** Method according to claim 5, wherein the data is sent in the network in frames containing the information used to determine the number of iterations still to be executed on the data sent.

**7.** Method according to claim 4, wherein the number of iterations executed by each unit in the system is fixed.

**8.** Method according to one of claims 4 to 7, wherein the number of iterations executed by a unit in the system is adapted to a time for data to transit in the unit.

**9.** A system comprising several networked units, the system being configured for routing data between a sending unit and a receiving unit and for applying a process to the data,
**characterized in that** the process comprises several sequential steps, at least some of the units in the network being configured to apply certain sequential steps in the process to the data they receive, to use latency times in data routing.

**10.** System according to claim 9, configured for sending in association with the data sent in the network, a piece of information which can be used to determine the progress of the process.

11. System according to one of claims 9 to 10, wherein the process applied to the data sent is a ciphering or deciphering process depending on the identity of the unit sending or receiving the data sent, or a data formatting process.

12. System according to one of claims 9 to 11, wherein the process applied to the data comprises several iterations.

13. System according to claim 12, wherein the data is sent into the network in association with a piece of information which can be used to determine the number of iterations executed or still to be executed on the data sent.

14. System according to claim 13, wherein the data is sent in the network in frames containing the information used to determine the number of iterations still to be executed on the data sent.

15. System according to claim 12, wherein the number of iterations executed by each unit in the system is fixed.

16. System according to one of claims 12 to 15, wherein the number of iterations executed by a unit in the system is adapted to a time for data to transit in the unit.

17. System according to one of claims 9 to 16, wherein the network is a local bus (ADB) interconnecting the units in the system.

18. System according to one of claims 9 to 16, wherein the system (PS3) comprises several sub-systems (SS1-SS9) networked through routers (ND1-ND9) forming nodes of a network, each sub-system comprising a network interface unit (NIC) connected to one of the routers, the interface units and the routers each comprising a shared processing unit (DPU) for executing one or more iterations of a process to be applied to the data sent by the network.

19. System according to one of claims 9 to 18, produced on a semiconductor chip.

**Fig. 1**

**Fig. 2**

**Fig. 3**

**Fig. 4**

**Fig. 5**